# EUROPÄISCHE PATENTSCHRIFT

(11) **EP 3 118 388 B1**
(45) Veröffentlichungstag und Bekanntmachung des Hinweises auf die Patenterteilung: **14.10.2020**
(21) Anmeldenummer: 16173096.5
(22) Anmeldetag: 06.06.2016
(51) Int. Cl.: E04F 13/06

(54) **GEBÄUDE-ÜBERGANG MIT EINER KUNSTSTOFF-PUTZLEISTE UND VERFAHREN ZUR HERSTELLUNG DER PUTZLEISTE**
JUNCTION ELEMENTS FOR A BUILDING WITH A PLASTIC PLASTER STRIP AND METHOD FOR PRODUCING THE STRIP
JONCTION D'ÉLÉMENTS DE BÂTIMENT AVEC UNE BAGUETTE EN PLASTIQUE ET METHODE POUR PRODUIRE LA BAGUETTE

(30) Priorität: 29.06.2015 DE 102015110391
(43) Veröffentlichungstag der Anmeldung: 18.01.2017
(73) Patentinhaber: Braun, August, 38101 okr. Cesky Krumlov (CZ)
(72) Erfinder: Meyer, Oliver, 8207 Schaffhausen (CH)
(74) Vertreter: Schmitt-Nilson Schraud Waibel Wohlfrom Patentanwälte Partnerschaft mbB

(56) Entgegenhaltungen:
- EP-A2- 1 857 606
- EP-A2- 2 221 424
- WO-A1-2011/045607
- DE-A1-102011 006 223
- DE-U1-202006 005 230
- US-B1- 6 344 268

## Beschreibung

Die Erfindung betrifft einen Gebäude-Übergang mit einem als Fenster- oder Türrahmen ausgebildeten ersten Bauteil eines Gebäudes und mit einem zweiten Bauteil eines Gebäudes, nämlich einer Putzschicht einer Gebäudewand oder einer Putzschicht auf einer Wärmedämmung einer Gebäudewand und mit einer an oder in diesem Gebäude-Übergang angebrachten Kunststoff-Anputzleiste. Die Erfindung betrifft auch ein Verfahren zum Herstellen einer Kunststoff-Anputzleiste.

Beim Bau von Gebäuden wird in der Regel so vorgegangen, dass Fensterstöcke und Türstöcke, das sind die fest mit dem Bauwerk verbundenen feststehenden Fenster- oder Türrahmen, in die entsprechenden Wandöffnungen des Rohbaus eingesetzt und dort befestigt werden. In einer späteren Phase wird der Rohbau außen und innen verputzt. Hierbei ist insbesondere an der Außenseite des Bauwerks der Anschluss des Putzes an den Fensterstock oder Türstock an die kritische Stelle, weil der Putz stirnseitig an das Material des Fensterstocks oder Türstocks anstößt und dort keine perfekte Bindung eingeht. Da der Putz beim Trocknen etwas schwindet, da Fenster- und Türstöcke Erschütterungen ausgesetzt sind, beispielsweise durch heftiges Zuschlagen der Fenster oder Türen, und da solche Bauwerksecken zudem hohen Temperaturschwankungen ausgesetzt sind, besteht die Gefahr, dass sich ein Riss oder Spalt zwischen dem Putz und dem Fenster- oder Türstock bildet. Hier kann dann Feuchtigkeit eindringen, die auf Dauer den Fensterstock, den Türstock oder den Putz oder die Dämmung schädigt, beispielsweise zur Ausbröckelung des Putzes führt. Daher werden häufig Anputzleisten am Übergang zwischen Fenster- oder Türstock zum Putz vorgesehen, die den Fenster- oder Türstock vom Putz entkoppeln und gleichzeitig eine Abdichtung dazwischen bereitstellen. Eine solche Anputzleiste ist beispielsweise aus der EP 0 875 641 A2 bekannt.

Allen solchen Anputzleisten ist gemeinsam, dass wesentliche Bestandteile von ihnen häufig durch Extrusion hergestellt werden. Diese Anputzleisten werden in der Regel aus Hartkunststoff, insbesondere aus PVC extrudiert.

Es besteht ein kontinuierlicher Bedarf, solche Anputzleisten mit geringeren Kosten herstellen zu können, um so die Anputzleisten zu günstigeren Preisen anbieten und verkaufen zu können.

Des Weiteren besteht ein kontinuierlicher Bedarf dafür, die wärmedämmende Wirkung von solchen Anputzleisten weiter zu erhöhen.

Die DE 10 2011 006 223 A1 zeigt eine Anputzleiste für eine Putzschicht auf einer Wärmedämmung und/oder einer Schalldämmung, wobei die Anputzleiste an einem Übergang zwischen einem Bauteil eines Gebäudes, insbesondere einem Fenster- oder Türrahmen, einer Fensterbank, einem Balken, einer Metallverbindung oder eine Lisene, und einer Wärme- und/oder Schalldämmung angeordnet ist, aufweisend einen Basisbereich mit einem Expansionsstreifen; einen vorragenden Einputzschenkel zum Einbetten in die Putzschicht; und wenigstens ein Fixiermittel, insbesondere ein Nagel, eine Schraube, ein Dübel, ein Bolzen oder ein Fixierungsstift, das sich durch eine Öffnung im Einputzschenkel hindurch in die Wärme- und/oder Schalldämmung erstreckt und die Anputzleiste an der Wärme- und/oder Schalldämmung fixiert; wobei der Basisbereich und der Expansionsstreifen vor der Wärme-/Schalldämmung positioniert sind; und wobei der Expansionsstreifen an dem Gebäude-Bauteil anliegt, nachdem er durch einen Verwender ausgehend von einem Einsperrzustand, in welchem ein Einsperrbereich der Anputzleiste den Expansionsstreifen an der Expansion gehindert hat, in einen für die Expansion freigegebenen Expansionsfreigabezustand gebracht worden ist.

Es ist daher eine Aufgabe der vorliegenden Erfindung, einen Gebäude-Übergang mit einer Kunststoff-Anputzleiste bereitzustellen, der kostengünstiger hergestellt werden kann und der zudem eine verbesserte wärmedämmende Wirkung hat. Zudem soll ein kostengünstiges Herstellungsverfahren für eine Kunststoff-Anputzleiste mit verbesserter wärmedämmender Wirkung angegeben werden.

Diese Aufgabe wird durch einen Gebäude-Übergang mit den Merkmalen des unabhängigen Anspruchs 1 und durch ein Verfahren mit den Verfahrensschritten des Anspruchs 10 gelöst. Vorteilhafte Weiterbildungen ergeben sich aus den abhängigen Ansprüchen.

Die Erfindung betrifft einen Gebäude-Übergang mit einem als Fenster- oder Türrahmen ausgebildeten ersten Bauteil eines Gebäudes, und mit einem zweiten Bauteil eines Gebäudes, nämlich einer Putzschicht einer Gebäudewand oder einer Putzschicht auf einer Wärmedämmung einer Gebäudewand, mit einer an oder in diesem Gebäude-übergang angebrachten erfindungsgemäßen Kunststoff-Anputzleiste, bei welcher der Einputzbereich in oder unter der Putzschicht, insbesondere in oder unter der Putzschicht auf der Wärmedämmung der Gebäudewand eingeputzt ist, und bei welcher der Festlegungsbereich der Kunststoff-Anputzleiste an wenigstens einem Bauteil des Gebäudes, also entweder an dem ersten oder an dem zweiten Gebäudebauteil oder an beiden Gebäudebauteilen befestigt ist.

Eine erfindungsgemäße Kunststoff-Anputzleiste hat einen Grundkörper, der wenigstens einen Einputzbereich aufweist, der zum Einputzen in oder unter eine Putzschicht, insbesondere in oder unter eine Putzschicht auf einer Wärmedämmung einer Gebäudewand, bestimmt ist. Wenigstens ein Teilbereich dieses Grundkörpers weist ein geschäumtes Kunststoffmaterial oder ein geschäumtes Kunststoff-Verbundmaterial auf.

Gemäß einem Grundgedanken der vorliegenden Erfindung ergibt sich durch die Verwendung eines geschäumten Kunststoffmaterials, also eines Kunststoffmaterials mit Einschlüssen von Luft, eines anderen Gases oder eines anderen Gasgemisches, sowie durch die Verwendung eines geschäumten Kunststoff-Verbundmaterials, also eines Kunststoff-Verbundmaterials mit Einschlüssen von Luft, eines anderen Gases oder eines anderen Gasgemisches, eine signifikante Materialersparnis an einzusetzendem Kunststoffmaterial bzw. Kunststoff-Verbundmaterial, wodurch die Material- und damit auch die Herstellungskosten für die erfindungsgemäße Kunststoffputzleiste erheblich reduziert werden können.

Des Weiteren ergibt sich dadurch auch eine geringere Masse und somit auch ein geringeres Gewicht für die gesamte Kunststoff-Putzleiste, wodurch der Transportaufwand und die Transportkosten sowie der Handlings-Aufwand an der Baustelle signifikant reduziert werden können.

Gemäß einem weiteren Grundgedanken der vorliegenden Erfindung wird durch die Verwendung eines geschäumten Kunststoffmaterials oder eines geschäumten Kunststoff-Verbundmaterials für wenigstens einen Teilbereich des Grundkörpers auch die spezifische Wärmeleitfähigkeit des Grundkörpers, verglichen mit der spezifischen Wärmeleitfähigkeit eines herkömmlichen Grundkörpers aus einem nicht geschäumten, massiven Kunststoffmaterial bzw. Kunststoff-Verbundmaterial reduziert, wodurch sich eine verbesserte wärmedämmende Wirkung der erfindungsgemäßen Kunststoff-Putzleiste ergibt.

Das Verhältnis der Einschlüsse von Luft, eines anderen Gases oder eines anderen Gasgemisches einerseits zu dem Kunststoffmaterial bzw. Kunststoff-Verbundmaterial des Grundkörpers andererseits ist dabei so zu wählen, dass die Kunststoff-Anputzleiste über eine ausreichend hohe Stabilität, Steifigkeit und Festigkeit verfügt, um ihre Funktion am Gebäudeübergang erfüllen zu können.

Durch die Formulierung im unabhängigen Anspruch 1, gemäß der wenigstens ein Teil-bereich des Grundkörpers ein geschäumtes Kunststoffmaterial oder ein geschäumtes Kunststoff-Verbundmaterial aufweist, ist sowohl die Ausführungsform der Erfindung abgedeckt, bei der ein erster Teil-Bereich des Grundkörpers ein geschäumtes Kunststoffmaterial oder ein geschäumtes Kunststoff-Verbundmaterial aufweist und bei der ein zweiter Teil-Bereich des Grundkörpers ein nicht-geschäumtes, massives Kunststoffmaterial bzw. Kunststoff-Verbundmaterial aufweist, wie dies zum Beispiel im Wege der Koextrusion hergestellt werden kann. Ebenso ist davon die Ausführungsform abgedeckt, gemäß welcher der gesamte Grundkörper ein geschäumtes Kunststoffmaterial bzw. ein geschäumtes Kunststoff-Verbundmaterial aufweist.

Selbstverständlich können weitere Elemente der Kunststoff-Anputzleiste, die üblicherweise nach dem Extrudieren an dem Grundkörper angebracht werden, wie zum Beispiel ein Armierungsgewebe-Abschnitt, ein Klebestreifen oder ein Expansionsstreifen mit verzögerter Ausdehnung, der auch als Kompri-Band bezeichnet wird, vorhanden sein. Diese können auf dem Fachmann bekannte Weise an der Kunststoff-Putzleiste angebracht oder mit dieser verbunden werden, und diese sind nicht als Bestandteil des Grundkörper oder als Teilbereich des Grundkörpers der Kunststoff-Putzleiste im Sinne von Anspruch 1 anzusehen.

Ein Armierungsgewebe-Abschnitt kann an dem Grundkörper klemmend befestigt oder an diesem angeschweißt werden. Ein Klebestreifen oder ein Expansionsstreifen mit verzögerter Ausdehnung werden üblicherweise an dem Grundkörper angeklebt.

Die Vorteile der geringeren Wärmeleitfähigkeit und der besseren Wärmedämmung sind bei allen erfindungsgemäßen Kunststoff-Anputzleisten gegeben, insbesondere auch bei innenliegenden Kunststoff-Anputzleisten, z.B. an exponierten Einbausituationen an Fensterlaibungen oder an Ecken im Innenbereich. Ganz besonders kommen diese Vorteile aber bei außenliegenden Kunststoff-Anputzleisten zum Tragen.

Prinzipiell kann das geschäumte Kunststoffmaterial oder das geschäumte Kunststoff-Verbundmaterial auf verschiedene Weise hergestellt werden, nämlich durch physikalisches Schäumen, bei dem das Material durch einen physikalischen Vorgang geschäumt wird; durch chemisches Schäumen, bei welchem dem Kunststoffgranulat, Kunststoff-Pulver oder Kunststoff-Agglomerat oder dem Kunststoffgranulat, Kunststoff-Pulver oder Kunststoff-Agglomerat und dem Zusatz-Verbundmaterial, z.B. Holz bzw. Fasern oder Mehl daraus oder Reishülsen bzw. Fasern oder Mehl daraus, ein Treibmittel, meist in Form eines so genannten Masterbatchgranulates, zugegeben wird und bei welchem sich durch Wärmezufuhr ein flüchtiger Bestandteil des Treibmittels abspaltet, was zum Aufschäumen der Schmelze führt; oder durch mechanisches Schäumen, bei dem Luft in das zu schäumende Harz oder die Paste eingerührt wird, und bei dem sich dieser Schaumstoff durch Vernetzen des Harzes oder durch Gelieren der Paste verfestigt.

Bei der Herstellung von Grundkörpern von Kunststoff-Anputzleisten hat sich die Herstellungsmethode des Extrudierens bewährt, weil so auf kostengünstige Weise und sehr schnell große Längen von Kunststoff-Anputzleisten-Grundkörpern mit gleich bleibendem Querschnitt hergestellt werden können.

Durch ein Schäumen des Kunststoffes bzw. des Kunststoff-Verbundmaterials direkt im Herstellungsprozess des Extrudierens wird das Material geschäumt und Luft, ein anderes Gas oder ein anderes Gasgemisch eingeschlossen. Dadurch werden die Dichte und gleichzeitig die Wärmeleitfähigkeit des Teilbereichs des Grundkörpers reduziert.

Das Verhältnis der Einschlüsse von Luft, eines anderen Gases oder eines anderen Gasgemisches einerseits und dem Kunststoffmaterial bzw. dem Kunststoff-Verbundmaterial andererseits bestimmt die Dichte und die Wärmeleitfähigkeit des gesamten Grundkörpers einerseits und die Stabilität, Steifigkeit und Festigkeit des Grundkörpers andererseits.

Schon ein geringes Volumenverhältnis von Einschlüssen von Luft, eines anderen Gases oder eines anderen Gasgemisches in das Kunststoffmaterial bzw. Kunststoff-Verbundmaterial, zum Beispiel von 5 %, bringt eine deutlich wahrnehmbare Materialeinsparung und eine deutlich verringerte Wärmeleitfähigkeit mit sich.

Dem Verhältnis der Einschlüsse von Luft, eines anderen Gases oder eines anderen Gasgemisches zu dem Kunststoffmaterial bzw. Kunststoff-Verbundmaterial sind nach oben hin Grenzen gesetzt, weil die Stabilität, Steifigkeit und Festigkeit und auch die Dichtigkeit des gesamten Grundkörpers ab Überschreiten eines bestimmten Verhältnisses nicht mehr ausreichend gegeben sind.

Allerdings haben Versuche der vorliegenden Anmelderin gezeigt, dass bis zu 70 % des Volumens des Kunststoffmaterials bzw. des Kunststoff-Verbundmaterials durch Einschlüsse von Luft, eines anderen Gases oder eines anderen Gasgemisches substituiert werden können, bei noch ausreichender Stabilität, Steifigkeit und Festigkeit des Grundkörpers und bei maximierter Materialeinsparung und maximierter Reduktion der Wärmeleitfähigkeit.

Gemäß einer ersten Ausführungsform der Erfindung weist der gesamte Grundkörper ein geschäumtes Kunststoffmaterial oder ein geschäumtes Kunststoff-Verbundmaterial auf. Dadurch können die Materialeinsparung, die Senkung der Wärmeleitfähigkeit und die Erhöhung der wärmedämmenden Wirkung maximiert werden.

Gemäß einer weiteren Ausführungsform der Erfindung ist das geschäumte Kunststoffmaterial als im Wesentlichen geschlossenzelliger Schaum-Kunststoff mit einer Vielzahl von Einschlusszellen von Luft, eines anderen Gases oder eines anderen Gasgemisches ausgebildet. Bei Verwendung von Kunststoff-Verbundmaterial kann das geschäumte Kunststoff-Verbundmaterial als ein im Wesentlichen geschlossenzelliges Schaum-Kunststoff-Verbundmaterial mit einer Vielzahl von Einschlusszellen von Luft, eines anderen Gases oder eines anderen Gasgemisches ausgebildet sein. Dadurch kann bei reduzierter Dichte und reduzierter Wärmeleitfähigkeit trotzdem die erforderliche Dichtigkeit des Grundkörpers/des Teilbereich des Grundkörpers beibehalten werden.

Gemäß der Erfindung weist das geschäumte Kunststoffmaterial oder das geschäumte Kunststoff-Verbundmaterial eine um 5 bis 95 % verringerte Dichte, verglichen mit der Dichte des reinen bzw. massiven Kunststoffmaterials bzw. Kunststoff-Verbundmaterials auf. Dadurch kann eine entsprechende Materialeinsparung erreicht werden.

Gemäß einer weiteren Ausführungsform der Erfindung weist das geschäumte Kunststoffmaterial eine um 5 bis 70 %, insbesondere um 25 bis 60 % verringerte Dichte, verglichen mit der Dichte des reinen bzw. massiven Kunststoffmaterials auf. Dadurch kann eine entsprechende Materialeinsparung erreicht werden.

Gemäß einer weiteren Ausführungsform der Erfindung weist das geschäumte Kunststoffmaterial eine um 5 bis 70 %, insbesondere um 25 bis 60 % verringerte Wärmeleitfähigkeit, verglichen mit der Wärmeleitfähigkeit des reinen bzw. massiven Kunststoffmaterials auf. Dadurch können eine entsprechende Senkung der Wärmeleitfähigkeit und eine entsprechende Erhöhung der wärmedämmenden Wirkung erreicht werden.

Gemäß einer weiteren Ausführungsform der Erfindung weist das geschäumte Kunststoffmaterial als Grundmaterial PVC, insbesondere Hart-PVC, auf, und das geschäumte Kunststoffmaterial weist eine Dichte von von 0,7 - 1,3 g/cm3, insbesondere von 0,7 - 1,0 g/cm3, und/oder eine Wärmeleitfähigkeit von 0,07 - 0,15 W/(m*K), insbesondere von 0,07 - 0,11 W/(m*K) auf. Je nach Rezeptur, z.B. dem enthaltenen Kreideanteil, können die Dichte und die Wärmeleitfähigkeit nach unten und oben abweichen. Verglichen mit der Dichte von 1,38-1,44 g/cm3 und der Wärmeleitfähigkeit von 0,17 W/(m*K) von nicht geschäumtem, massiven Hart-PVC kann somit eine Verringerung der Dichte und/oder der Wärmeleitfähigkeit von 5 bis 70 %, insbesondere von 25 bis 60 % erreicht werden.

Gemäß einer weiteren Ausführungsform der Erfindung weist das geschäumte Kunststoffmaterial als Grundmaterial Polystyrol auf und das geschäumte Kunststoffmaterial weist eine Dichte von 0,5 - 0,9 g/cm3, insbesondere von 0,5 - 0,7 g/cm3, und/oder eine Wärmeleitfähigkeit von 0,07 - 0,15 W/(m*K), insbesondere von 0,07 - 0,11 W/(m*K) auf. Verglichen mit der Dichte von 1,05 g/cm3 und der Wärmeleitfähigkeit von 0,17 W/(m*K) von nicht geschäumtem, massiven Polystyrol kann somit eine Verringerung der Dichte und/oder der Wärmeleitfähigkeit von 5 bis 70 %, insbesondere von 25 bis 60 % erreicht werden.

Gemäß einer weiteren Ausführungsform der Erfindung ist das Grund-Kunststoff-Verbundmaterial des geschäumten Kunststoff-Verbundmaterials als Holz-Kunststoff-Verbundwerkstoff oder als Verbundwerkstoff aus Kunststoff und Reishülsen bzw. Fasern oder Mehl daraus ausgebildet. Dadurch können Kunststoff eingespart und nachwachsende Rohstoff verwendet werden, was die Ressourcen schont und eine umweltfreundliche Herstellung garantiert.

Gemäß der vorliegenden Erfindung ist die erfindungsgemäße Kunststoff-Anputzleiste an einem Gebäude-Übergang zwischen einem als Fenster- oder Türrahmen ausgebildeten ersten Bauteil eines Gebäudes und einem zweiten Bauteil eines Gebäudes, nämlich einer Putzschicht einer Gebäudewand oder einer Putzschicht auf einer Wärmedämmung einer Gebäudewandplatziert und weist den Einputzbereich, der in oder unter eine Putzschicht, insbesondere in oder unter eine Putzschicht auf einer Wärmedämmung einer Gebäudewand, eingeputzt ist, und einen Festlegungsbereich auf, mit dem die Anputzleiste an wenigstens einem Bauteil des Übergangs befestigt ist. Der Einputzbereich und der Festlegungsbereich sind als ein gemeinsames Extrusionsteil oder als separate Extrusionsteile ausgebildet; und der Einputzbereich und/oder der Festlegungsbereich weisen ein geschäumtes Kunststoffmaterial oder ein geschäumtes Kunststoff-Verbundmaterial auf.

Durch die erfindungsgemäße Kunststoff-Anputzleiste wird ein dauerhaft dichter Übergang zwischen den beiden Gebäude-Bauteilen sichergestellt.

Bei der erfindungsgemäßen Ausbildung des ersten Gebäudebauteils als Fenster- oder Türrahmen und bei der erfindungsgemäßen Anordnung der Kunststoff-Anputzleiste an einem Gebäudeübergang zwischen einem Fenster- oder Türrahmen und einem zweiten Gebäudebauteil, nämlich einer Putzschicht einer Gebäudewand oder einer Putzschicht auf einer Wärmedämmung einer Gebäudewand, ist die erfindungsgemäß reduzierte Wärmeleitfähigkeit bzw. die erfindungsgemäß erhöhte wärmedämmende Wirkung von großem Vorteil, denn dort entweicht üblicherweise viel Wärme, und dieser Effekt wird erfindungsgemäß deutlich reduziert.

Des Weiteren ergibt sich bei einer solchen Kunststoff-Anputzleiste eine signifikante Materialeinsparung, weil üblicherweise der Festlegungsbereich und der Einputzbereich eine Materialdicke von wenigstens 1 mm, insbesondere von 1-4 mm aufweisen.

Gemäß einer weiteren Ausführungsform der Erfindung handelt es sich bei dem Gebäudeübergang über einen außen liegenden Gebäudeübergang, und die Kunststoff-Anputzleiste ist eine außen liegende Kunststoff-Anputzleiste. Dabei sind die Vorteile der geringeren Wärmeleitfähigkeit und der erhöhten wärmedämmenden Wirkung besonders durchschlagend.

Gemäß einer weiteren Ausführungsform der Erfindung handelt es sich bei dem Gebäudeübergang um einen innen liegenden Gebäudeübergang, und die Kunststoff-Anputzleiste ist eine innen liegende Kunststoff-Anputzleiste. Die erfindungsgemäßen Vorteile der geringeren Wärmeleitfähigkeit und der erhöhten wärmedämmenden Wirkung treten dabei besonders gut zutage, wenn die Kunststoff-Anputzleiste an einem Gebäudeübergang zwischen einem als Fenster- oder Türrahmen ausgebildeten ersten Gebäudebauteil und einer innen liegenden Putzschicht auf einer Gebäudewand, insbesondere auf einer Leibung, angeordnet ist.

Gemäß einer weiteren Ausführungsform der erfindungsgemäßen Kunststoff-Anputzleiste sind der Festlegungsbereich und der Einputzbereich einstückig ausgebildet. In diesem Fall weisen sowohl der Festlegungsbereich als auch der Einputzbereich ein geschäumtes Kunststoffmaterial bzw. geschäumtes Kunststoff-Verbundmaterial auf. Eine solche Kunststoff-Anputzleiste dichtet den Gebäudeübergang zuverlässig ab und ist verhältnismäßig einfach aufgebaut.

Gemäß einer weiteren Ausführungsform der erfindungsgemäßen Kunststoff-Anputzleiste verfügt der Festlegungsbereich über einen Klebestreifen zur Befestigung an dem ersten Gebäudebauteil. Durch einen solchen Klebestreifen wird die Kunststoff-Anputzleiste mit ihrem Festlegungsbereich zuverlässig mit dem Gebäudebestandteil verbunden.

Der Begriff "Klebestreifen" umfasst auch eine streifenförmig aufgebrachte Klebstoffmenge. Die Ausführung kann so sein, dass der Klebestreifen, welcher auf einer Seite an die restliche Kunststoff-Anputzleiste anschließt und auf der anderen Seite an dem ersten Gebäudebauteil anklebbar ist, schon als solches den Festlegungsbereich darstellt. Es wird jedoch betont, dass es alternative Arten der Ausbildung des Festlegungsbereiches gibt, insbesondere Anschrauben der Kunststoff-Anputzleiste an einem der beiden Gebäudeteile oder Einklemmen in einen Spalt zwischen dem ersten Bauteil des Gebäudes und der Wärmedämmung oder Fixieren oder Befestigen an der Dämmung.

Gemäß einer weiteren Ausführungsform der erfindungsgemäßen Kunststoff-Anputzleiste ist der Einputzbereich mit einer Rinnenprofilierung für eine verbesserte Anhaftung an dem Putz versehen. Durch eine solche Rinnenprofilierung wird die Oberfläche des Einputzbereichs, mit der der Putz eine Bindung eingeht, vergrößert, und somit die Anhaftung verbessert.

Bei einer weiteren Ausführungsform der erfindungsgemäßen Kunststoff-Anputzleiste ist an dem Einputzbereich ein Armierungsgewebeabschnitt befestigt, der zum Einputzen bestimmt ist. Der Armierungsgewebeabschnitt kann dabei beispielsweise in Form eines mit alkalibeständigem Material beschichteten Glasfasergitters ausgebildet sein. Nach dem Aufbringen des Putzes befindet sich der Armierungsgewebeabschnitt unter der Putzoberfläche, in den meisten Fällen ist er seinerseits mittels Spachtelmasse an dem Untergrund befestigt. Der Armierungsgewebeabschnitt verbessert die Haftung des Putzes am Untergrund und stellt die dauerhafte Rissfreiheit des Putzes sicher.

Erfindungsgemäß ist eine abtrennbare oder abbrechbare streifenförmige Schutzlasche vorgesehen. An dieser Schutzlasche, an der ebenfalls ein Klebestreifen vorgesehen sein kann, kann eine Folie befestigt werden, die den Fensterrahmen und das Fenster oder den Türrahmen und die Tür, oder dergleichen, überspannt, und während des Einputzens vor Verschmutzung und Beschädigungen schützt. Nach dem erfolgten Einputzen wird diese Schutzlasche durch Abtrennen oder Abbrechen von der restlichen Kunststoff-Anputzleiste entfernt und entsorgt.

Gemäß einer weiteren Ausführungsform der erfindungsgemäßen Kunststoff-Anputzleiste sind der Festlegungsbereich und der Einputzbereich derart getrennt voneinander ausgebildet, dass - gegebenenfalls nach Abtrennen einer streifenförmigen Schutzlasche - mittels einer Führungsverbindung eine Relativbewegung zwischen Festlegungsbereich und Einputzbereich ermöglicht wird. In diesem Fall ist die Kunststoff-Anputzleiste zweiteilig ausgebildet, wobei ein Teil von dem Festlegungsbereich und der andere Teil von dem Einputzbereich gebildet wird. Durch eine derartige Relativbeweglichkeit zwischen Festlegungs- und Einputzbereich können Materialbewegungen, beispielsweise infolge von Temperaturschwankungen oder Abschwindungen zwischen dem fest mit dem ersten Gebäude-Bauteil verbundenen Festlegungsbereich und dem fest mit der Putzschicht verbundenen Einputzbereich einfach und zuverlässig ausgeglichen werden, indem eine Relativbewegung des Einputzbereichs zu dem Festlegungsbereich ermöglicht. Gleichzeitig wird die Abdichtungsfunktion der Kunststoff-Anputzleiste beibehalten, ohne dass der Putzanschluss oder der Putz Schaden nimmt.

Gemäß einer weiteren Ausführungsform der erfindungsgemäßen Kunststoff-Anputzleiste sind der Festlegungs- und der Einputzbereich über einen flexiblen Materialabschnitt, der auch als Schlaufe bezeichnet wird, miteinander verbunden, der eine Relativbewegung zwischen Festlegungs- und Einputzbereich erlaubt. Auch bei dieser Ausführungsform kann die Kunststoff-Anputzleiste Materialbewegungen, beispielsweise infolge von Temperaturschwankungen zwischen dem ersten und dem zweiten Gebäude-Bauteil ausgleichen, und zwar durch eine Bewegung, beispielsweise eine Dehnung des flexiblen Materialabschnitts. Gleichzeitig wird die Abdichtungsfunktion der Kunststoff-Anputzleiste beibehalten, ohne dass der Putz Schaden nimmt.

Gemäß einer weiteren Ausführungsform der erfindungsgemäßen Kunststoff-Anputzleiste verfügt diese über einen Expansionsstreifen, der so ausgebildet ist, dass er - gegebenenfalls nach Lösen eines Einsperrbereichs - sich in Richtung auf eines der beiden Gebäude-Bauteile hin ausdehnt und sich daran anlegt, um so eine Abdichtung zwischen beiden Bauteilen zu gewährleisten.

Wie bereits oben erwähnt, sind der Klebestreifen, falls vorhanden, der Armierungsgewebe-Abschnitt, falls vorhanden, und der Expansionsstreifen, falls vorhanden, nicht als dem Grundkörper der Kunststoff-Anputzleiste zugehörig zu betrachten, und ihre Materialien unterscheiden sich üblicherweise von dem Material des Grundkörpers.

Für die abtrennbare oder abbrechbare, streifenförmige Schutzlasche gilt, dass diese aus dem Material des Grundkörpers ist und zusammen mit diesem im Wege der Extrusion hergestellt worden ist. Wenn für den Grundkörper und die Schutzlasche nur ein Material vorgesehen wird, so sind der Grundkörper und die Schutzlasche aus geschäumtem Kunststoffmaterial oder aus geschäumtem Kunststoff-Verbundmaterial, wodurch sich eine weitere Materialeinsparung ergibt. Alternativ dazu ist es auch möglich, den Grundkörper und die Schutzlasche zusammen zu koextrudieren, sodass hierfür wenigstens zwei verschiedene Materialbereiche vorhanden sind.

Die Erfindung betrifft auch ein Verfahren zum Herstellen einer Kunststoff-Anputzleiste, mit einem Grundkörper, der wenigstens einen Einputzbereich aufweist, der zum Einputzen in oder unter eine Putzschicht, insbesondere in oder unter eine Putzschicht auf einer Wärmedämmung einer Gebäudewand, bestimmt ist, bei dem der Grundkörper extrudiert wird, und bei dem bei wenigstens einem Teilbereich des Grundkörpers dem Granulat, Pulver oder Agglomerat des Kunststoff-Grundmaterials oder dem Granulat, Pulver oder Agglomerat des Kunststoff-Verbundmaterials vor der formgebenden Öffnung des Extrusionswerkzeugs wenigstens ein Treibmittel zugegeben wird, und sich bei der Wärmezufuhr vor und/oder bei der formgebenden Öffnung ein flüchtiger Bestandteil des Treibmittels abspaltet, sodass das Kunststoffmaterial oder das Kunststoff-Verbundmaterial des Teilbereichs des Grundkörpers aufgeschäumt wird.

Mit einem solchen erfindungsgemäßen Verfahren können Kunststoff-Anputzleisten im Extrusionsverfahren hergestellt, und durch ein Aufschäumen des Kunststoffes direkt im Herstellungsprozess kann das Kunststoffmaterial bzw. das Kunststoff-Verbundmaterial geschäumt und die Dichte des Grundkörpers reduziert werden. Durch die geringere Dichte kann man eine geringere Wärmeleitfähigkeit und somit eine bessere wärmedämmende Wirkung bzw. einen besseren Isolationswert erhalten. Die Masse und das Gewicht der Kunststoffputzleiste wird somit reduziert, und die Putzleiste kann somit wesentlich günstiger hergestellt werden, da der Materialanteil an Kunststoff geringer ist.

Durch die Vergrößerung des Anteils an zugegebenem Treibmittel kann der Schäumungsgrad und somit das Verhältnis von Einschlüssen an Luft, an anderen Gasen oder einem anderen Gasgemisch erhöht werden.

Das erfindungsgemäße Herstellungsverfahren, bei dem dem Grundmaterial des Kunststoffgranulats, -pulvers oder -agglomerats wenigstens ein Treibmittel zugesetzt wird, hat sich als besonders kostengünstig erwiesen.

Gemäß einem weiteren Grundgedanken der Erfindung haben die Erfinder herausgefunden, dass durch Zusetzen eines Treibmittels noch vor dem Extrusionswerkzeug ein Grundkörper für eine Kunststoff-Putzleiste hergestellt werden kann, der einerseits eine ausreichend hohe Stabilität, Steifigkeit und Festigkeit aufweist, damit sich die Kunststoff-Putzleiste für ihren Einsatzzweck eignet, andererseits jedoch eine Dichtereduzierung des Materials des Grundkörpers mit verringerter Wärmeleitfähigkeit und somit erhöhter wärmedämmender Wirkung und gleichzeitiger Materialeinsparung erreicht werden kann.

Kunststoff-Pulver hat üblicherweise eine geringere Teilchengröße als KunststoffGranulat. Bei einem Kunststoff-Agglomerat hängen einzelne Körner oder Materialstücke wenigstens teilweise zusammen, im Gegensatz zum Granulat, wo sie überwiegend lose/getrennt voneinander vorliegen.

Gemäß einer ersten Ausführungsform des erfindungsgemäßen Verfahrens wird dem Granulat, Pulver oder Agglomerat des Kunststoff-Grundmaterials des gesamten Grundkörpers oder dem Granulat, Pulver oder Agglomerat des Kunststoff-Verbundmaterials des gesamten Grundkörpers vor der formgebenden Öffnung des Extrusionswerkzeugs ein Treibmittel zugegeben, und bei der Wärmezufuhr vor und/oder bei der formgebenden Öffnung spaltet sich ein flüchtiger Bestandteil des Treibmittels ab, sodass das Kunststoffmaterial oder das Kunststoff-Verbundmaterial des gesamten Grundkörpers aufgeschäumt wird. Dadurch werden die erfindungsgemäß erhaltenen Vorteile maximiert.

Ebenso ist es möglich, dieses Verfahren als Koextrusionsverfahren durchzuführen, bei dem der erste Teilbereich des Grundkörpers aus geschäumtem Kunststoffmaterial oder aus geschäumtem Kunststoff-Verbundmaterial und ein zweiter Teilbereich des Grundkörpers aus einem nicht geschäumten massiven Kunststoffmaterial oder Kunststoff-Verbundmaterial hergestellt werden.

Gemäß einer weiteren Ausführungsform der Erfindung handelt es sich bei dem Treibmittel um Azodicarbonamid (ADC), um 4,4-Oxibis (Benzolsulfohydrazid, OBSH) oder um Natriumhydrogencarbonat. Diese Treibmittel haben sich als besonders günstig und effektiv erwiesen.

Die vorstehend mit Bezug auf die Kunststoff-Anputzleiste, angegebenen Vorteile und Ausführungsformen ergeben sich in gleicher Weise für das erfindungsgemäße Herstellungsverfahren. Diese werden hier, um Wiederholungen zu vermeiden, nicht noch einmal angegeben. Das Recht, hierauf abhängige Verfahrensansprüche zu richten, behält sich die Anmelderin ausdrücklich vor.

Die Erfindung ist nachfolgend anhand von Ausführungsbeispielen mit Bezug auf die beiliegenden Figuren näher erläutert.
Fig. 1 zeigt eine Seitenansicht einer ersten Anputzleiste gemäß einem ersten Ausführungsbeispiel der Erfindung;
Fig. 2 zeigt eine Seitenansicht einer zweiten Anputzleiste gemäß einem zweiten Ausführungsbeispiel der Erfindung;
Fig. 3 zeigt eine Seitenansicht einer Abschlussschiene gemäß einem dritten Ausführungsbeispiel, das nicht von den Patentansprüchen abgedeckt ist;
Fig. 4 zeigt eine Seitenansicht einer Putz-Eckleiste gemäß einem vierten Ausführungsbeispiel, das nicht von den Patentansprüchen abgedeckt ist; und
Fig. 5 zeigt eine Seitenansicht einer weiteren Abschlussschiene gemäß einem fünften Ausführungsbeispiel, das nicht von den Patentansprüchen abgedeckt ist.

Die erste Anputzleiste 2, die zweite Anputzleiste 26, die Abschlussschienen 68 und 118 sowie die Putz-Eckleiste 96 sind nachfolgend stellvertretend für beliebige Anputz-leisten, Abschlussschienen und Putz-Eckleisten beschrieben, bei denen der Grundkörper aus einem geschäumten Kunststoffmaterial oder einem geschäumten Kunststoff-Verbundmaterials ist.

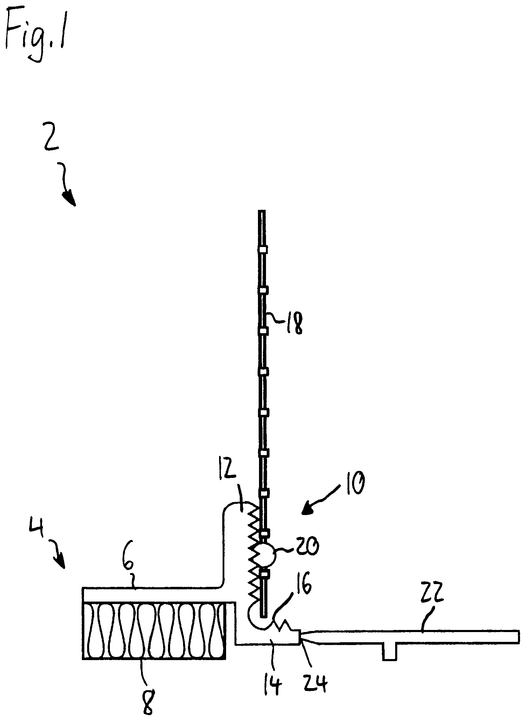

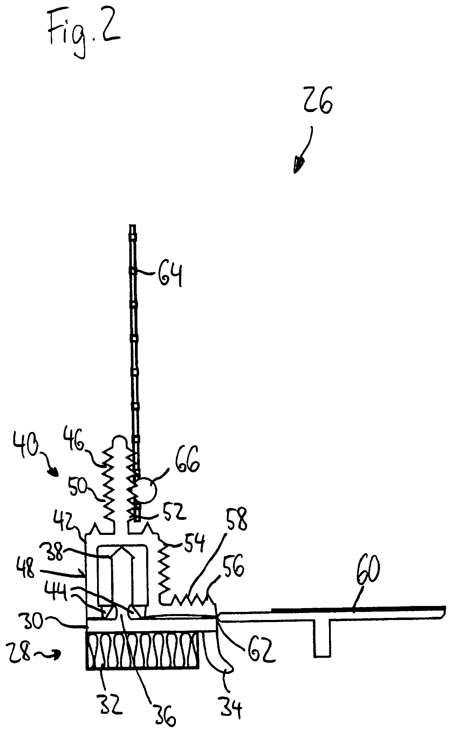

Fig. 1 und 2 zeigen die Anputzleisten 2 und 26 jeweils im Auslieferungszustand, bei dem die streifenförmige Schutzlasche noch nicht abgetrennt worden ist.

Die in Fig. 1 exemplarisch dargestellte erste Anputzleiste 2 umfasst einen Festlegungsbereich 4 und einen Anputzbereich 10 mit einem Armierungsgewebeabschnitt 18 und eine streifenförmige Schutzlasche 22.

Der Festlegungsbereich 4 und der Anputzbereich 10 sind integral miteinander ausgebildet, so dass die vorliegende Anputzleiste 2 auch als einstückige Anputzleiste 2 bezeichnet werden kann.

Die streifenförmige Schutzlasche 22 ist mittels einer Abbrech-Materialbrücke 24 mit einer Putzendseite 14 des Anputzbereichs 10 verbunden. Die streifenförmige Schutzlasche 22 verfügt noch über einen Abstandssteg, der im Montagezustand der Anputzleiste 2 an der Außenseite eines ersten Gebäude-Bauteils anliegen kann.

Der Festlegungsbereich 4, der Anputzbereich 10 und die streifenförmige Schutzlasche 22 sind gemeinsam im Wege der Extrusion aus einem geschäumten Kunststoffmaterial oder einem geschäumten Kunststoff-Verbundmaterial hergestellt worden.

Der Festlegungsbereich 4 wird vorliegend von einer in Fig. 1 waagrecht verlaufenden Basiswand 6 und einem daran fixierten Klebestreifen 8 gebildet, der zur Befestigung an einem ersten Gebäude-Bauteil, beispielsweise einem Fenster- oder Türrahmen, bestimmt ist. Das erste Gebäude-Bauteil, an dem der Klebestreifen 8 anliegt, kann auch als Fensterbank, als Balken, als Metallverbindung, oder als Lisene ausgebildet sein.

Der Anputzbereich 12 wird von der Außenseite des Wegragschenkels 12, von der von dem Fenster- oder Türrahmen weggerichteten Putzendseite 14 und von dem Armierungsgewebeabschnitt 18 gebildet.

An der Unterseite hat die erste Anputzleiste 2 einen gestuften Verlauf, die Unterseite der Putzendseite 14 liegt, bezogen auf die Einbausituation, näher an dem Fenster-/Türrahmen als die Unterseite der Basiswand 6.

Der Armierungsgewebeabschnitt 18 ist vorliegend mit dem Wegragschenkel 12 mittels einer Verbindung, die vorliegend exemplarisch als Ultraschallverschweißung 20 dargestellt ist, verbunden.

Die von dem Fenster- oder Türrahmen weggerichtete Putzendseite 14 und die von der Wärmedämmung in Richtung zu der gegenüberliegenden Fenster- oder Türrahmenseite gerichtete Oberfläche des Wegragschenkels 12 sind mit einer Rinnenprofilierung 16 zur Verbesserung der Anhaftung des Putzes versehen.

Auf der Baustelle wird zunächst die Anputzleiste 2 auf die entsprechende, durch die Maße der Fenster- oder Türöffnung vorgegebene Länge abgeschnitten und danach am Übergang zwischen Fenster-/Türrahmen und Wärmedämmung angebracht, indem die Anputzleiste 2 mit ihrem Festlegungsbereich 4 in den Spalt zwischen Fenster- oder Türrahmen und Wärmedämmung eingeschoben wird, sodass die Anputzleiste 2 mit der Oberseite ihrer Basiswand 6 an der spaltseitigen Stirnseite der Wärmedämmung anliegt, mit der Rückseite ihres Wegragschenkels 12 auf der Außenseite der Wärmedämmung aufliegt und mit dem Klebestreifen 8 an der Oberfläche des Fenster- oder Türrahmens angeklebt wird.

Nach Überspannen des Fensters mit Fensterrahmen oder der Tür mit Türrahmens mit einer Folie, die an der streifenförmigen Schutzlasche 22 befestigt, insbesondere angeklebt wird, erfolgt das Verputzen. Dabei wird, ggf. nach vorherigem Aufbringen einer Spachtelmasse hinter dem Armierungsgewebeabschnitt 18 eine den Armierungsgewebeabschnitt 18 und den Anputzbereich 10 bis zu einer Putzabzugskante einbettende Putzschicht aufgebracht, die im Wesentlichen durch das Ende der Putzendseite 14 gebildet wird, an die sich die streifenförmige Schutzlasche 22 anschließt. Die streifenförmige Schutzlasche 22 wird nach erfolgtem Einputzen abgebrochen und entfernt.

Der Klebestreifen 8 kann eine gewisse Ausdehn- und Schrumpffähigkeit haben, um Abstandsänderungen zwischen der Unterseite der Basiswand 6 und der Oberfläche des Fenster- oder Türrahmens in gewissen Grenzen auszugleichen, was eine gute Abdichtung bei sich ändernden Bedingungen gewährleistet.

Alternativ zum Vorsehen eines Klebestreifens 8 kann das Element 8 auch als Expansionsstreifen mit einer gewissen Ausdehn- und Schrumpffähigkeit ausgebildet sein, ohne dass an seiner dem Fenster- oder Türrahmen zugewandten Seite eine Klebung erfolgen muss. In diesem Falle erfolgt ein Einsetzen und quasi ein Verspannen in dem Spalt oder ein Befestigen an der Dämmung. Dadurch können ebenfalls Abstandsänderungen zwischen der Unterseite der Basiswand 6 und der Oberfläche des Fenster- oder Türrahmens in gewissen Grenzen ausgeglichen werden, was eine gute Abdichtung bei sich ändernden Bedingungen gewährleistet.

Die in Fig. 2 exemplarisch dargestellte zweite Anputzleiste 26 verfügt wie die erste Anputzleiste 2 über einen Festlegungsbereich 28, der mit einem Abschnitt an einem ersten Gebäude-Bauteil, insbesondere einem Fenster- oder Türrahmen befestigbar ist, über einen Anputzbereich 40, der vorliegend als verschiebbarer Vorderbereich 40 ausgebildet ist, an dem ein Armierungsgewebeabschnitt 64 befestigt ist und der zusammen mit dem Armierungsgewebeabschnitt 64 zum Einbetten in eine Putzschicht bestimmt ist, sowie über eine streifenförmige Schutzlasche 26.

Bei der streifenförmigen Schutzlasche 60 ist nun die auf der Außenseite aufgebrachte Klebeschicht erkennbar, sie ist über eine Abbrech-Materialbrücke 62 sowohl mit dem Festlegungsbereich 28 als auch mit dem Anputzbereich 40 verbunden, ansonsten stimmt sie mit der streifenförmigen Schutzlasche 22 aus Fig. 1 überein und wird im Folgenden nicht noch einmal erläutert.

Anders als die einteilig ausgebildete erste Anputzleiste 2 ist die zweite Anputzleiste 26 nun zweiteilig ausgebildet, mit einem Festlegungsbereich 28 und einem dazu verschiebbaren Anputzbereich 40.

Der Festlegungsbereich 28 umfasst eine Basiswand 30 mit einem an deren Unterseite angebrachten Klebestreifen 32, der mit seiner Unterseite im montierten Zustand der Anputzleiste 26 an dem Fenster- oder Türrahmen dichtend anliegt und gegebenenfalls damit verklebt ist.

Falls es sich um einen Expansionsstreifen 32 aus einem flexiblen Material handelt, so kann dieser zusammengedrückt werden und sich wieder ausdehnen, um so Abstandsänderungen zwischen der Unterseite der Basiswand 30 und der Oberfläche des Fenster- oder Türrahmens in gewissen Grenzen ausgleichen zu können.

Am rechten außenseitigen Ende der Basiswand 38 erstreckt sich eine Schutzlippe 34 nach unten. Diese Schutzlippe kann aus einem weicheren flexiblen Kunststoffmaterial ausgebildet sein und somit eine gewisse Flexibilität aufweisen. Eine solche flexible Schutzlippe 34 legt sich im eingebauten Zustand der zweiten Anputzleiste 26 an die Oberfläche des Fenster- oder Türrahmens an, und zwar an einer Position außerhalb des Klebestreifens 32 und verhindert somit zuverlässig, dass Feuchtigkeit zu dem Klebestreifen 32 gelangen kann. Die Schutzlippe 34 kann insbesondere zusammen mit der Basiswand 30 und dem nachfolgend noch näher erläuterten Führungsfortsatz 36, mit dem Anputzbereich 40 und der streifenförmigen Schutzlasche 60 koextrudiert werden.

Ein Führungsfortsatz 36 ragt nach oben hin von der Basiswand 30 weg und ist integral mit dieser ausgebildet. Dieser Führungsfortsatz 36 umfasst einen zuoberst angeordneten verbreiterten Endkopf 38, einen darunterliegenden Fortsatz-Wandbereich geringerer Wandstärke und einen die Verbindung mit der Basiswand 30 bildenden Fortsatz-Wandbereich von weiter verringerter Wandstärke.

Der verschiebbare Anputzbereich 40 gliedert sich in einen zuoberst angeordneten Wegragschenkel 36, einen dahinter ansetzenden Aufnahmeraum 42 mit innen gelegener Wärmedämmungs-Anlageseite 48 und äußerer Putzseite 54, wobei der Wegragschenkel 46 eine innere Putzseite 50 und eine äußere Putzseite 54 aufweist, und in eine am unteren äußeren Ende des Aufnahmeraums 42 ansetzende und nach außen verlaufende Putzendseite 56.

Der Aufnahmeraum 42 ist so bemessen, dass das vordere Ende des Endkopfs 38 bei vollständig in dem Aufnahmeraum 42 gelegenem Führungsfortsatz 36 und demgemäß bei Anlage der hinteren Endfläche der Seitenwände des Aufnahmeraums 42 an der Vorderseite der Basiswand 30 in geringem Abstand zur oberen Wand des Aufnahmeraums 42 positioniert ist. An dem unteren Ende der Innenseiten des Aufnahmeraums 42 setzen einander gegenüberliegende Führungsvorsprünge 44 an und erstrecken sich so weit innen, bezogen auf die Symmetrieachse des Aufnahmeraums 42, dass sie den Führungsfortsatz 36 dazwischen aufnehmen und führen. In der gezeigten Position des Führungsfortsatzes 36 greifen die Führungsvorsprünge 44 in den untersten Bereich des Führungsfortsatzes 36 mit verringerter Wandstärke ein und halten diesen Führungsfortsatz 36 und somit den gesamten Festlegungsbereich 36 bezüglich dem verschiebbaren Anputzbereich 40 in der minimalen Verschiebeposition. Die Führungsvorsprünge 44 können dabei aus einem gegenüber dem Material des verschiebbaren Anputzbereichs 40 weicherem Kunststoffmaterial bestehen.

Wenn man sich vorstellt, dass die Abbrech-Materialbrücke bzw. die AbbrechMaterialbrücken 62 des Festlegungsbereichs 28 und des verschiebbaren Anputzbereichs 40 zu der streifenförmigen Schutzlasche 60 durchtrennt werden, kann der Anputzbereich 40 gegenüber dem Festlegungsbereich 28 verschoben werden, und zwar bis zu einer maximalen Verschiebeposition, bei der die Führungsvorsprünge 44 an den Endkopf 38 anschlagen. Dadurch können Bewegungen zwischen Wärmedämmung/Putzschicht und Fenster-/Türrahmen auf besonders vorteilhafte Weise kompensiert werden.

Von einem Mittenbereich der oberen Wand des Aufnahmeraums 42 erstreckt sich der obere Wegragschenkel 46 nach oben. Die innere Putzseite 50 und die äußere Putzseite 52 des Wegragschenkels 46, die äußere Putzseite 54 der äußeren Wand des Aufnahmeraums 42 und die Putzendseite 56 sind mit einer Rinnenprofilierung 58 versehen, um die Oberfläche, an welcher der Putz anhaftet, zu vergrößern, und somit eine bessere Verbindung mit dem Putz zu schaffen. Diese Rinnenprofilierung 58 kann sich, wie in Fig. 2 ersichtlich, auch über die vordere Wand des Aufnahmeraums 42 erstrecken.

An der äußeren Putzseite 52 des Wegragschenkels 46 ist ein in Fig. 2 sich nach vorne erstreckender Armierungsgewebeabschnitt 64 befestigt, und zwar mittels einer hier beispielhaft gezeigten Ultraschallverschweißung 66.

Bei der Montage der zweiten Anputzleiste 26 muss kein Spalt zwischen Wärmedämmung und Fenster-/Türrahmen vorhanden sein.

Auf der Baustelle wird zunächst die Anputzleiste 26 auf die entsprechende, durch die Maße der Fenster- oder Türöffnung vorgegebene Länge abgeschnitten und danach am Übergang zwischen Fenster-/Türrahmen und Wärmedämmung angebracht, indem sie mit der Wärmedämmungs-Anlageseite 48 an die Wärmedämmung angelegt und mit dem Klebestreifen 32 an den Fenster-/Türrahmen angelegt und verklebt. Danach wird die Schutzfolie über den Fenster- oder Türrahmen gespannt und an der Klebeschicht der streifenförmigen Schutzlasche 60 fixiert. Dann erfolgt das Einputzen des Anputzbereichs 40, gegebenenfalls nach zuvor erfolgtem Anbringen von Spachtelmasse hinter dem Armierungsgewebeabschnitt 64. Diese Spachtelmasse kann dabei insbesondere den Zwischenraum zwischen der Außenseite der Wärmedämmung und zum Armierungsgewebeabschnitt 64 ausfüllen. Beim Putzen erstreckt sich die Putzschicht entweder über den gesamten, mit Rinnenprofilierung 58 versehenen Bereich des Anputzbereichs 40 oder, falls Spachtelmasse aufgebracht worden ist, über die äußeren Putzseiten 52, 54 und über die Putzendseite 56 bis zur Putzendkante, die durch das Ende der Putzendseite 56 definiert ist.

Nach dem erfolgten Einputzen kann die streifenförmige Schutzlasche 60 entfernt werden, indem die Abbrechmaterialbrücken 62 durchtrennt, beispielsweise von Hand abgezogen werden, gegebenenfalls unter Anschneiden der Enden.

Durch das Durchtrennen der Abbrechmaterialbrücke 62, die über die streifenförmige Schutzlasche 60 vorher noch den Festlegungsbereich 28 und den verschiebbaren Anputzbereich 40 zusammengehalten hat, ist der verschiebbare Anputzbereich 40 nun von dem Festlegungsbereich 28 entkoppelt und kann sich durch die Konstruktion mit Führungsfortsatz 36, Endkopf 38, und Aufnahmeraum 42 mit Führungsvorsprüngen 44 gegenüber der Basiswand 30 bewegen, und somit Bewegungen zwischen Wärmedämmung und Putzschicht sowie Fenster-/Türrahmen ausgleichen.

Bei der zweiten Anputzleiste 26 handelt es sich um eine beispielhaft beschriebene zweiteilige Anputzleiste, bei der zwei Bereiche 28 und 40 gegeneinander verschoben werden können, um Bewegungen zwischen Wärmedämmung/Putzschicht und Fenster-/Türrahmen ausgleichen zu können.

Von der Erfindung sind auch andere zweiteilige Anputzleisten erfasst, insbesondere auch zweiteilige Anputzleisten, die wenigstens teilweise in einen Spalt zwischen Wärmedämmung und Fenster-/Türrahmen eingeschoben werden.

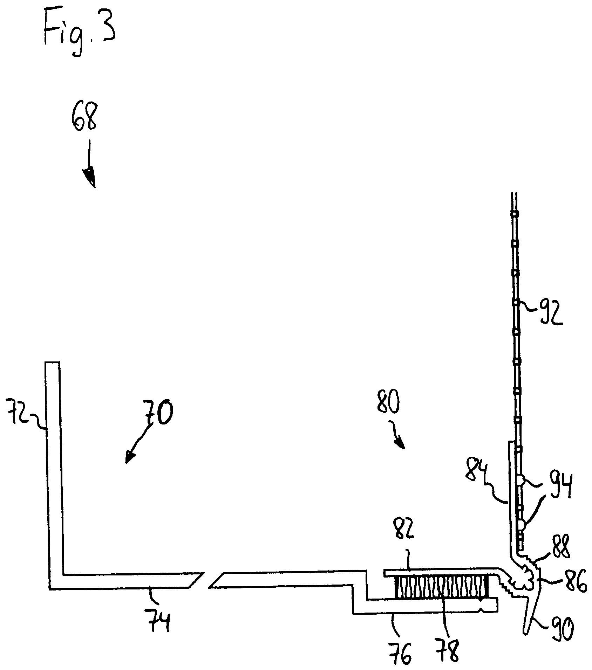

Die in Fig. 3 gezeigte Abschlussschiene 68, die nicht von den Patentansprüchen abgedeckt ist, umfasst eine Winkelschiene 70 und eine damit verbundene Außenleiste 80.

Die Winkelschiene 70 verfügt über einen ersten Schenkel 72, der zur Anlage an einem hier nicht gezeigten Bauwerk, beispielsweise an einer Wand vorgesehen ist, und der beispielsweise durch eingeschossene Bolzen oder durch Schrauben daran befestigt werden kann, und über einen zweiten, im Wesentlichen waagrecht verlaufenden Schenkel 74, der an der Unterseite des ersten Schenkels 72 ansetzt, sich von dort waagrecht nach außen fortsetzt und an seinem von der Wand abgelegenen Ende eine Stufe 76 nach unten aufweist.

Die Außenleiste 80 verfügt weiterhin über einen im Wesentlichen waagrecht verlaufenden Abschluss-stirnseitigen Schenkel 82 und über einen damit über einen Übergangsbereich 76 verbundenen, nach oben ragenden Außenschenkel 84. Der Abschluss-stirnseitige Schenkel 82 ist oberhalb der Stufe 76 des zweiten Schenkels 74 der Winkelschiene 70 angeordnet und mittels eines Schaumstoff-Klebebands oder komprimierten Dichtbands 78 auf den nach unten zurückgesetzten Stufenendbereich 76 aufgeklebt. Dabei bilden die Oberseite des zweiten Schenkels 74 (mit Ausnahme des Abschnitts der Stufe 76) und die Oberseite des Abschluss-stirnseitigen Schenkels 82 im vorliegenden Beispiel eine Ebene.

An der Außenseite des Außenschenkels 84 ist ein Armierungsgewebeabschnitt 92 mittels geeigneten Befestigungen, die vorliegend als Ultraschallverschweißungen 94 ausgeführt sind, verbunden.

Der Übergangsbereich 86 zwischen Abschluss-stirnseitigem Schenkel 82 und Außenschenkel 84 ist im vorliegenden Ausführungsbeispiel gerundet ausgebildet und beschreibt in etwa einen Halb- oder Zweidrittelkreis mit Öffnung schräg nach innen oben, so dass hier in Querrichtung ein Einsteckbereich für einen Steckverbinder gebildet wird. An den schräg nach unten innen und schräg nach oben außen liegenden Außenwandbereichen ist jeweils eine Rinnenprofilierung 104 ausgebildet, und der rechte Außenwandbereich des Übergangsbereichs 86 bildet eine Putzabzugskante bzw. eine Putzendseite.

Des Weiteren ist eine Tropfnasenlippe 90 vorgesehen, die sich von dem rechten unteren Endbereich des Übergangsbereichs 86 nach unten schräg nach innen erstreckt. Durch eine solche Tropfnasenlippe 90 wird erreicht, dass die Unterseite der Winkelschiene 70 trocken bleibt und dass der Anteil an Wasser, der zu dem Klebestreifen 78 gelangen kann, minimiert wird.

Bei der Verwendung der Abschlussschiene 68 arbeitet man normalerweise so, dass, ggf. nach Abschneiden der Abschlussschiene 68 auf die entsprechende vorgegebene Länge, zunächst die Winkelschiene 70 an der Gebäudewand befestigt wird, normalerweise mehrere Winkelschienen 70 eine nach der anderen entlang der Länge der Wand befestigt werden, wobei an den Übergängen mit Überlappung gearbeitet werden kann oder wobei an den Übergängen Steckverbinder, die in die Übergangsbereiche 86 eingreifen, angebracht werden, die jeweils zwei benachbarte Abschlussschienen 68 miteinander verbinden.

Dann wird die Außenleiste 80 aufgeklebt, normalerweise mehrere, eine nach der anderen entlang der Länge der Winkelschienen 70. Dann werden die Wärmedämmungen eingebracht, und zwar so, dass sie mit ihrer Gebäudeseite an dem ersten Schenkel 72 und darüber an der Wand anliegen und dass sie mit der Unterseite auf dem zweiten Schenkel 74 der Winkelschiene 70 und dem Abschluss-stirnseitigen Schenkel 82 aufliegen. Beim Einbringen und Aufsetzen der Dämmung kann der Außenschenkel 74 mitsamt Armierungsgewebeabschnitt 92 nach außen geschwenkt werden. Die Dämmung wird in üblicher Weise an der Wand befestigt.

Jetzt wird der Armierungsgewebeabschnitt 92 von außen her mit Spachtelmasse auf der Außenseite der Wärmedämmung befestigt. Es versteht sich, dass nach oben hin weiteres Armierungsgewebe, das nicht eingezeichnet ist, überlappend an dem Armierungsgewebeabschnitt 92 anschließt und ebenfalls an der Dämmung befestigt wird. Nachdem die Spachtelmasse angezogen hat oder erhärtet ist, wird außenseitig eine Putzschicht aufgetragen. Dabei kann der in Fig. 3 am weitesten außen gelegene Übergangsbereichsabschnitt 86 als Abzugskante dienen.

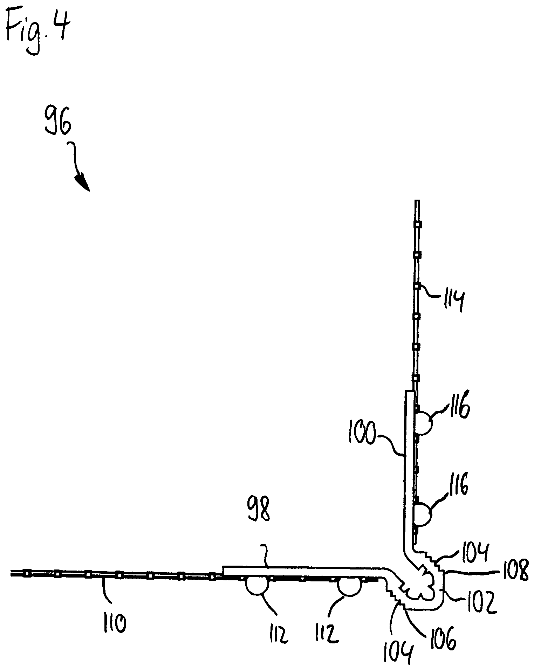

Die Putzeckleiste 96 der Fig. 4, die nicht von den Patentansprüchen abgedeckt ist, weist wie die Außenleiste 80 der Abschlussschiene 68 einen ersten in Fig. 4 waagerecht verlaufenden Schenkel 98, einen zweiten, in Fig. 4 senkrecht, also nach oben verlaufenden Schenkel 100, und einen Übergangsbereich 102 auf, der das rechte Ende des ersten Schenkels 98 und das untere Ende des zweiten Schenkels 100 miteinander verbindet und im Wesentlichen den Verlauf eines Halb- oder Zweidrittelkreises beschreibt, so dass die Schenkel 98 und 100 gegeneinander verschwenkt werden können und dass ein Steckverbinder oder Steckzapfen in Querrichtung in den Übergangsbereich 102 eingebracht werden kann, um zwei in Querrichtung nebeneinander liegende Putz-Eckleisten 96 miteinander zu verbinden.

An der Unterseite des ersten Schenkels 98 ist mittels geeigneter Verbindungen, die hier exemplarisch als Ultraschallverschweißungen 112 dargestellt sind, ein erster Armierungsgewebeabschnitt 110 befestigt, der in Richtung des ersten Schenkels 98 nach links verläuft. Ebenso ist an der Außenseite des zweiten Schenkels 100 ein zweiter Armierungsgewebeabschnitt 114 mittels geeigneten Verbindungen, die hier exemplarisch als Ultraschallverschweißungen 116 dargestellt sind, befestigt. Dieser zweite Armierungsgewebeabschnitt 114 verläuft in Richtung des zweiten Schenkels 100 nach oben.

Der nach links unten weisende und der nach rechts oben weisende Außenwandbereich des Übergangsbereichs 102 ist jeweils mit einer Rinnenprofilierung 104 zur Verbesserung der Anhaftung des Putzes versehen.

Der am Weitesten unten gelegene Wandabschnitt des Übergangsbereichs 102 bildet eine erste Putzabzugskante 106 und der am Weitesten rechts gelegene Wandabschnitt des Übergangsbereichs 102 bildet eine zweite Putzabzugskante 108. Durch Verbiegen der Schenkel 98 und 100 zueinander kann die Putz-Eckleiste 96 auf praktisch jeden erforderlichen Winkel an einer Ecke eingestellt werden.

Beim Verputzen von Gebäudeecken wird wie folgt vorgegangen. Zunächst werden die Putz-Eckleiste 96, in der Praxis mehrere neben- oder übereinander angeordnete Putz-Eckleisten 96 an die Gebäudeecke angelegt und in üblicher Weise mit dem Gebäude verbunden, beispielsweise durch das Einschießen von Bolzen. Hierbei kann man mit Überlappung arbeiten, oder es können aneinander angrenzende Putz-Eckleisten durch Steckverbinder bzw. Steckzapfen, die in die Übergangsbereiche 102 der benachbarten Putz-Eckleisten 96 eingesetzt werden, miteinander verbunden werden können. Dann werden die Armierungsgewebeabschnitte 102 von außen mit Spachtelmasse an den Gebäudewänden beidseits der Gebäudeecke befestigt, und daran anschließend können weitere hier nicht gezeigte Armierungsgewebeabschnitte angebracht und ebenfalls mit Spachtelmasse an der Gebäudewand befestigt werden. Nun wird beidseits der Gebäudeecke von außen her auf beide Wände der Putz aufgetragen, wobei die Putzabzugskanten 106 und 108 hier die Dicke der aufzubringenden Putzschicht vorgeben können. Nach dem Erhärten-Lassen der Putzschicht ist die Gebäudeecke fertig verputzt.

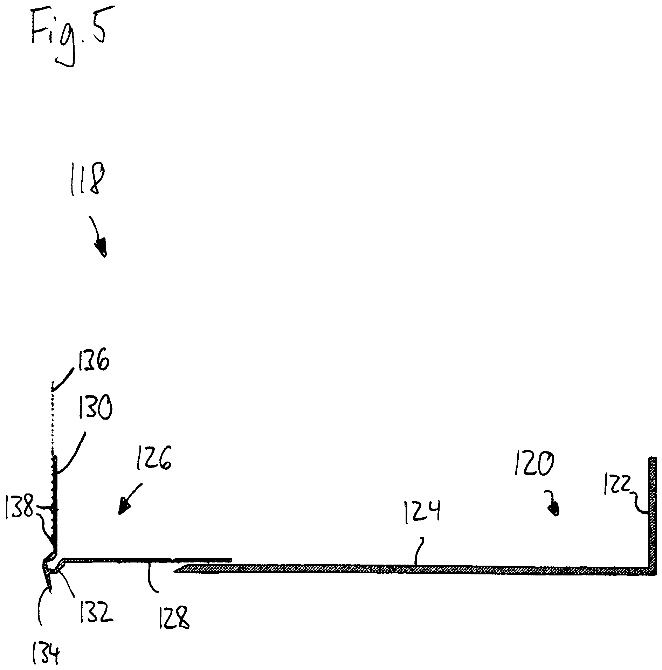

Fig. 5 zeigt eine Seitenansicht einer Abschlussschiene 118 gemäß einem fünften Ausführungsbeispiel, das nicht von den Patentansprüchen abgedeckt ist.

Die in Fig. 5 gezeigte Abführschiene 118 umfasst eine Winkelschiene 120 und eine damit unverbundene Außenleiste 126. Die Winkelschiene 120 verfügt über einen ersten Schenkel 122, der zur Anlage an einem hier nicht gezeigten Bauwerk, bspw. an einer Wand vorgesehen ist, und der bspw. durch eingeschossene Bolzen oder Schrauben daran befestigt werden kann, und über einen zweiten, im Wesentlichen waagerecht verlaufenden Abschluss-stirnseitigen Schenkel 124, der an der Unterseite des ersten Schenkels 122 ansetzt und sich von dort waagerecht nach außen fortsetzt.

Die Außenleiste 126 verfügt über einen im Wesentlichen waagerecht verlaufenden Abschluss-stirnseitigen Schenkel 128 und über einen damit über einen Übergangsbereich 132 verbundenen, nach oben ragenden Außenschenkel 130.

Der Abschluss-stirnseitige Schenkel 128 liegt mit seinem Endbereich auf dem Endbereich des Abschluss-stirnseitigen Schenkels 124 der Winkelschiene 120 auf.

An der Außenseite des Außenschenkels 130 ist ein Armierungsgewebeabschnitt 136 mittels geeigneten Befestigungen, die vorliegend als Ultraschall-Verschweißungen 138 ausgeführt sind, verbunden. Der Übergangsbereich 132 zwischen Abschluss-stirnseitigem Schenkel 128 und Außenschenkel 130 ist im vorliegenden Ausführungsbeispiel gerundet ausgebildet und beschreibt in etwa einen Halb- oder Zweidrittelkreis mit Öffnung schräg nach innen oben, sodass hier in Querrichtung ein Einsteckbereich für einen Steckverbinder gebildet wird. Der linke Außenwandbereich des Übergangsbereichs 132 bildet eine Putzabzugskante bzw. eine Putzendseite.

Des Weiteren ist eine Tropfnasenlippe 134 vorgesehen, die sich von dem rechten unteren Endbereich des Übergangsbereichs 132 nach unten schräg nach innen erstreckt. Durch solch eine Tropfnasenlippe 134 wird erreicht, dass der Anteil an Wasser, der zu der Unterseite der Abschlussschiene 118 gelangen kann, minimiert wird, und dass die Unterseite der Abschlussschiene 118 trocken bleibt.

Bei der Verwendung der Abschluss-Schiene 118 arbeitet man normalerweise so, dass, ggf. nach Abschneiden der Abschluss-Schiene 118 auf die entsprechende, vorgegebene Länge, zunächst die Winkelschiene 120 auf übliche Weise an der Gebäudewand befestigt wird, normalerweise mehrere Winkelschienen 120, eine nach der anderen entlang der Länge der Wand befestigt werden, wobei an den Übergängen mit Überlappung gearbeitet werden kann. Dann wird die Bauwerks-Wärmedämmung von oben aufgesetzt und die Außenleiste 126 wird mindestens temporär an der Bauwerks-Wärmedämmung fixiert, z. B. durch Einschieben des Abschluss-stirnseitigen Schenkels 128 zwischen Unterseite der Bauwerks-Wärmedämmung und dem Endbereich des zweiten Schenkels 124 der Winkelschiene 120. Ebenso kann die Außenleiste 126 an der Wärmedämmung angenagelt, angeschraubt oder auch aufgeklebt werden.

Jetzt wird der Armierungsgewebe-Abschnitt 136 von außen her mit Spachtelmasse auf der Außenseite der Wärmedämmung befestigt. Es versteht sich, dass nach oben hin weiteres Armierungsgewebe, was nicht eingezeichnet ist, überlappend an dem Armierungsgewebe 136 anschließen kann und ebenfalls an der Dämmung befestigt wird. Nachdem die Spachtelmasse angezogen hat oder erhärtet ist, wird außenseitig eine Putzschicht aufgetragen. Dabei kann der in Fig. 5 am weitesten außen gelegene Außenwand-Bereichs-Abschnitt eine Putzabzugskante bzw. eine Putzendseite bilden.

Die Winkelschiene 120 kann auch ohne Außenleiste 126 als Dämmabschluss-Kunststoff-Sockelleiste zum Einsatz kommen.

Wenn der extrudierte Grundkörper der Anputzleisten 2 und 26, dies sind bei der ersten Anputzleiste die Basiswand 6, der Wegragschenkel 12, die Putzendseite 14 und die streifenförmige Schutzlasche 22, bei der zweiten Anputzleiste 26 die Basiswand 30 mit Führungsfortsatz 36 des Festlegungsbereichs 28, der Aufnahmeraum 42, der Wegragschenkel 46 und die Putzendseite 56 des Anputzbereichs 40 und die streifenförmige Schutzlasche 60, bzw. der extrudierte Grundkörper der Abschlussschiene 68, nämlich die Winkelschiene 70 mit ihren beiden Schenkeln 72 und 74 und die Außenleiste 80 mit ihren Schenkeln 82 und 84 und mit ihrem Übergangsbereich 86 samt Tropfnase 90, bzw. der extrudierte Grundkörper der Putz-Eckleiste 96, nämlich die beiden Schenkel 98 und 100 mitsamt Übergangsbereich 102, bzw. der extrudierte Grundkörper der Abschluss-Schiene 118, nämlich die Winkelschiene 120 mit ihren beiden Schenkeln 122 und 124 und die Außenleiste 126 mit ihren Schenkeln 128 und 130 mitsamt Übergangsbereich 132, aus einem geschäumten Kunststoffmaterial oder einem geschäumten Kunststoff-Verbundmaterial hergestellt ist bzw. sind, insbesondere im Wege der Extrusion hergestellt ist bzw. sind, so haben die erfindungsgemäße Anputzleiste 2, 26, die Abschlussschiene 68 und die Putzeckleiste 96, insbesondere deren Grundkörper, eine geringere Dichte, verglichen mit der Dichte, die sich bei einer nicht geschäumten massiven Ausführung aus Kunststoffmaterial bzw. Kunststoff-Verbundmaterial ergeben würde. Somit ergibt sich eine geringere Wärmeleitfähigkeit, eine höhere wärmedämmende Wirkung und eine kostengünstigere Herstellung, da weniger Kunststoffmaterial bzw. Kunststoff-Verbundmaterial benötigt wird.

Besonders geeignete Kunststoff-Grundmaterialien sind PVC, insbesondere Hart- PVC, Polystyrol und Polypropylen.

Besonders geeignete Grundmaterialien des geschäumten Kunststoff-Verbundmaterials sind ein Holz-Kunststoff-Verbundwerkstoff, ein sogenannter Wood-Plastic-Composite, oder ein Verbundwerkstoff aus Kunststoff und Reishülsen bzw. Fasern oder Mehl daraus.

### Bezugszeichenliste

- 2: erste Anputzleiste
- 4: Festlegungsbereich
- 6: Basiswand
- 8: Klebestreifen
- 10: Einputzbereich
- 12: Wegragschenkel
- 14: Putzendseite
- 16: Rinnenprofilierung
- 18: Armierungsgewebeabschnitt
- 20: Ultraschallverschweißung
- 22: streifenförmige Schutzlasche
- 24: Abbrech-Materialbrücke
- 26: zweite Anputzleiste
- 28: Festlegungsbereich
- 30: Basiswand
- 32: Klebestreifen
- 34: Schutzlippe
- 36: Führungsfortsatz
- 38: Endkopf
- 40: verschiebbarer Vorderbereich/Einputzbereich
- 42: Aufnahmeraum
- 44: Führungsvorsprünge
- 46: Wegragschenkel
- 48: Wärmedämmungs-Anlageseite
- 50: innere Putzseite
- 52: äußere Putzseite
- 54: äußere Putzseite
- 56: Putzendseite
- 58: Rinnenprofilierung
- 60: streifenförmige Schutzlasche
- 62: Abbrechmaterialbrücke
- 64: Armierungsgewebeabschnitt
- 66: Ultraschallverschweißung
- 68: Abschlussschiene
- 70: Winkelschiene
- 72: erster Schenkel
- 74: zweiter Schenkel
- 76: Endstufe
- 78: Kleberstreifen
- 80: Außenleiste
- 82: Abschluss-stirnseitiger Schenkel
- 84: Außenschenkel
- 86: Übergangsbereich/Steckverbinder-Einsteckbereich
- 88: Rillenprofilierung
- 90: Tropfnasenlippe
- 92: Armierungsgewebeabschnitt
- 94: Ultraschallverschweißung
- 96: Putz-Eckleiste
- 98: erster Schenkel
- 100: zweiter Schenkel
- 102: Übergangsbereich/Steckverbinder-Einsteckbereich
- 104: Rinnenprofilierung
- 106: erste Putzabzugskante
- 108: zweite Putzabzugskante
- 110: erster Armierungsgewebeabschnitt
- 112: Ultraschallverschweißungen
- 114: zweiter Armierungsgewebeabschnitt
- 116: Ultraschallverschweißungen
- 118: Abschlussschiene
- 120: Winkelschiene
- 122: erster Schenkel
- 124: zweiter Schenkel
- 126: Außenleiste
- 128: Abschluss-stirnseitiger Schenkel
- 130: Außenschenkel
- 132: Übergangsbereich/Steckverbinder-Einsteckbereich
- 134: Tropfnasenlippe
- 136: Armierungsgewebeabschnitt
- 138: Ultraschallverschweißung

## Patentansprüche

1. Gebäude-Übergang mit einem als Fenster- oder Türrahmen ausgebildeten ersten Bauteil eines Gebäudes und mit einem zweiten Bauteil eines Gebäudes, nämlich einer Putzschicht einer Gebäudewand oder einer Putzschicht auf einer Wärmedämmung einer Gebäudewand,
aufweisend eine an oder in diesem Gebäude-Übergang angebrachte Kunststoff-Anputzleiste (2, 26), mit einem Grundkörper, der wenigstens einen Einputzbereich (10, 40) aufweist, der in oder unter der Putzschicht, insbesondere in oder unter der Putzschicht auf der Wärmedämmung der Gebäudewand eingeputzt ist,
wobei die Kunststoff-Anputzleiste (2, 26) einen Festlegungsbereich (4, 28) aufweist, mit dem die Kunststoff-Anputzleiste (2, 26) an wenigstens einem Bauteil des Gebäudes, also entweder an dem ersten oder an dem zweiten Gebäudebauteil oder an beiden Gebäudebauteilen befestigt ist, wobei der Einputzbereich (10, 40) und der Festlegungsbereich (4, 28) der Kunststoff-Anputzleiste (2, 26) als ein gemeinsames Extrusionsteil oder als separate Extrusionsteile ausgebildet sind;
wobei die Kunststoff-Anputzleiste (2, 26) eine abtrennbare oder abbrechbare streifenförmige Schutzlasche (22, 60) aufweist; die aus dem Material des Grundkörpers ist und zusammen mit diesem im Wege der Extrusion hergestellt worden ist; oder wobei für den Grundkörper und die Schutzlasche (22, 60) wenigstens zwei verschiedene Materialbereiche vorhanden sind, die zusammen koextrudiert sind; wobei wenigstens ein Teilbereich des Grundkörpers ein geschäumtes Kunststoffmaterial oder ein geschäumtes Kunststoff-Verbundmaterial aufweist; **dadurch gekennzeichnet, dass** der Einputzbereich (10) und/oder der Festlegungsbereich (4) der Kunststoff-Anputzleiste (2, 26) ein geschäumtes Kunststoffmaterial oder ein geschäumtes Kunststoff-Verbundmaterial aufweisen; und
das geschäumte Kunststoffmaterial oder das geschäumte Kunststoff-Verbundmaterial der Kunststoff-Anputzleiste (2, 26) eine um 5 bis 95 % verringerte Dichte, verglichen mit der Dichte des reinen bzw. massiven Kunststoffmaterials bzw. Kunststoff-Verbundmaterials aufweist.

2. Gebäude-Übergang nach Anspruch 1, wobei der gesamte Grundkörper der Kunststoff-Anputzleiste (2, 26) ein geschäumtes Kunststoffmaterial oder ein geschäumtes Kunststoff-Verbundmaterial aufweist.

3. Gebäude-Übergang nach Anspruch 1 oder 2, wobei das geschäumte Kunststoffmaterial der Kunststoff-Anputzleiste (2, 26) als im Wesentlichen geschlossenzelliger Schaum-Kunststoff mit einer Vielzahl von Einschlusszellen von Luft, eines anderen Gases oder eines anderen Gasgemisches ausgebildet ist oder wobei das geschäumte Kunststoff-Verbundmaterial der Kunststoff-Anputzleiste (2, 26) als ein im Wesentlichen geschlossenzelliges Schaum-Kunststoff-Verbundmaterial mit einer Vielzahl von Einschlusszellen von Luft, eines anderen Gases oder eines anderen Gasgemisches ausgebildet ist.

4. Gebäude-Übergang nach einem der vorhergehenden Ansprüche, wobei das geschäumte Kunststoffmaterial oder das geschäumte Kunststoff-Verbundmaterial der Kunststoff-Anputzleiste (2, 26) eine um 5 bis 70 %, insbesondere um 25 bis 60 % verringerte Dichte, verglichen mit der Dichte des reinen Kunststoffmaterials bzw. des reinen Kunststoff-Verbundmaterials aufweist und/oder wobei das geschäumte Kunststoffmaterial oder das geschäumte Kunststoff-Verbundmaterial der Kunststoff-Anputzleiste (2, 26) eine um 5 bis 70 %, insbesondere um 25 bis 60 % verringerte Wärmeleitfähigkeit, verglichen mit der Wärmeleitfähigkeit des reinen Kunststoffmaterials bzw. Kunststoff-Verbundmaterials aufweist.

5. Gebäude-Übergang nach einem der vorhergehenden Ansprüche, wobei das geschäumte Kunststoffmaterial als Grundmaterial PVC, insbesondere Hart-PVC, aufweist und wobei das geschäumte Kunststoffmaterial eine Dichte von 0,7 - 1,3 g/cm3, insbesondere von 0,7 - 1,0 g/cm3, aufweist und/oder eine Wärmeleitfähigkeit von 0,07 - 0,15 W/(m*K), insbesondere von 0,07 - 0,11 W/(m*K) aufweist.

6. Gebäude-Übergang nach einem der Ansprüche 1 bis 4, wobei das geschäumte Kunststoffmaterial als Grundmaterial Polystyrol aufweist und wobei das geschäumte Kunststoffmaterial eine Dichte von 0,5 - 0,9 g/cm3, insbesondere von 0,5 - 0,7 g/cm3, aufweist und/oder eine Wärmeleitfähigkeit von 0,07 - 0,15 W/(m*K), insbesondere von 0,07 - 0,11 W/(m*K) aufweist.

7. Gebäude-Übergang nach einem der Ansprüche 1 bis 4, wobei das Grund-Kunststoff-Verbundmaterial des geschäumten Kunststoff-Verbundmaterials als Holz-Kunststoff-Verbundwerkstoff oder als Verbundwerkstoff aus Kunststoff und Reishülsen bzw. Fasern oder Mehl daraus ausgebildet ist.

8. Gebäude-Übergang nach einem der vorhergehenden Ansprüche, wobei es sich bei dem Gebäude-Übergang über einen außenliegenden Gebäude-Übergang handelt und die Kunststoff-Anputzleiste eine außenliegende Kunststoff-Anputzleiste ist.

9. Gebäude-Übergang nach einem der vorhergehenden Ansprüche, wobei es sich bei dem Gebäude-Übergang über einen innenliegenden Gebäude-Übergang handelt und die Kunststoff-Anputzleiste eine innenliegende Kunststoff-Anputzleiste ist.

10. Verfahren zum Herstellen einer Kunststoff-Anputzleiste (2, 26), mit einem Grundkörper, der wenigstens einen Einputzbereich (10, 40), der zum Einputzen in oder unter eine Putzschicht, insbesondere in oder unter eine Putzschicht auf einer Wärmedämmung einer Gebäudewand, bestimmt ist, und einen Festlegungsbereich (4, 28) aufweist, mit dem die Kunststoff-Anputzleiste (2, 26) zur Befestigung an wenigstens einem Bauteil des Gebäudes, also entweder an dem ersten oder an dem zweiten Gebäudebauteil oder an beiden Gebäudebauteilen bestimmt ist;
bei dem der Grundkörper extrudiert wird,
wobei der Einputzbereich (10, 40) und der Festlegungsbereich (4, 28) der Kunststoff-Anputzleiste (2, 26) als ein gemeinsames Extrusionsteil oder als separate Extrusionsteile ausgebildet sind;
wobei die Kunststoff-Anputzleiste (2, 26) eine abtrennbare oder abbrechbare streifenförmige Schutzlasche (22, 60) aufweist, die aus dem Material des Grundkörpers ist und zusammen mit diesem im Wege der Extrusion hergestellt wird; oder wobei für den Grundkörper und die Schutzlasche (22, 60) wenigstens zwei verschiedene Materialbereiche vorhanden sind, die zusammen koextrudiert werden;
**dadurch gekennzeichnet, dass**
der Einputzbereich (10, 40) und/oder der Festlegungsbereich (4, 28) der Kunststoff-Anputzleiste (2, 26) aus einem geschäumten Kunststoffmaterial oder einem geschäumten Kunststoff-Verbundmaterial extrudiert werden; und.dass
bei wenigstens einem Teilbereich des Grundkörpers dem Granulat, Pulver oder Agglomerat des Kunststoff-Grundmaterials oder dem Granulat, Pulver oder Agglomerat des Kunststoff-Verbundmaterials vor der formgebenden Öffnung des Extrusionswerkzeugs wenigstens ein Treibmittel zugegeben wird, und sich bei der Wärmezufuhr vor und/oder bei der formgebenden Öffnung ein flüchtiger Bestandteil des Treibmittels abspaltet, sodass das Kunststoffmaterial oder das Kunststoff-Verbundmaterial des Teilbereichs des Grundkörpers aufgeschäumt wird.

11. Verfahren nach Anspruch 10, wobei dem Granulat, Pulver oder Agglomerat des Kunststoff-Grundmaterials des gesamten Grundkörpers oder dem Granulat, Pulver oder Agglomerat des Kunststoff-Verbundmaterials des gesamten Grundkörpers vor der formgebenden Öffnung des Extrusionswerkzeugs ein Treibmittel zugegeben wird, und wobei sich bei der Wärmezufuhr vor und/oder bei der formgebenden Öffnung ein flüchtiger Bestandteil des Treibmittels abspaltet, sodass das Kunststoffmaterial oder das Kunststoff-Verbundmaterial des gesamten Grundkörpers aufgeschäumt wird.

12. Verfahren nach Anspruch 10 oder 11, wobei es sich bei dem Treibmittel um Azodicarbonamid (ADC), um 4,4-Oxibis (Benzolsulfohydrazid, OBSH) oder um Natriumhydrogencarbonat handelt.

## Claims

1. A building transition comprising a first component of a building in the form of a window or door frame and a second component of a building, namely a plaster layer of a building wall or a plaster layer on a thermal insulation of a building wall,
comprising a plastic plastering strip (2, 26) fastened to or in said building transition and having a base body that has at least one plastering portion (10, 40) that is plastered into or under the plaster layer, in particular into or under the plaster layer on the thermal insulation of the building wall,
wherein said plastic plastering strip (2, 26) has a fixing portion (4, 28) by means of which the plastic plastering strip (2, 26) is fastened to at least one component of the building, i.e. either to the first or the second building component or to both building components,
wherein said plastering portion (10, 40) and said fixing portion (4, 28) of the plastic plastering strip (2, 26) are formed as a common extrusion member or as separate extrusion members;
wherein said plastic plastering strip (2, 26) comprises a strip-shaped protective lug (22, 60) which is adapted to be severed or broken off and which consists of the material of the base body and has been manufactured together with the same by extrusion; or wherein at least two different material portions, which are co-extruded jointly, are present for the base body and the protective lug (22, 60);
wherein at least a partial region of the base body comprises a foamed plastic material or a foamed plastic composite material;
**characterized in that** the plastering portion (10) and/or the fixing portion (4) of the plastic plastering strip (2, 26) comprises a foamed plastic material or a foamed plastic composite material; and
that the foamed plastic material or the foamed plastic composite material of the plastic plastering strip (2, 26) has a density which is reduced by 5 to 95% compared to the density of the pure or solid plastic material or plastic composite material.

2. The building transition according to claim 1,
wherein the entire base body of the plastic plastering strip (2, 26) comprises a foamed plastic material or a foamed plastic composite material.

3. The building transition according to claim 1 or 2,
wherein the foamed plastic material of the plastic plastering strip (2, 26) is designed as a substantially closed-cell foam plastic with a multiplicity of inclusion cells of air, another gas or another gas mixture, or wherein the foamed plastic composite material of the plastic plastering strip (2, 26) is formed as a substantially closed-cell foam-plastic composite material with a multiplicity of inclusion cells of air, another gas or another gas mixture.

4. The building transition according to any of the preceding claims,
wherein the foamed plastic material or the foamed plastic composite material of the plastic plastering strip (2, 26) has a density which is reduced by 5 to 70%, in particular by 25 to 60%, compared to the density of the pure plastic material or the pure plastic composite material and/or wherein the foamed plastic material or the foamed plastic composite material of the plastic plastering strip (2, 26) has a thermal conductivity which is reduced by 5 to 70%, in particular by 25 to 60%, compared to the thermal conductivity of the pure plastic material or plastic composite material.

5. The building transition according to any of the preceding claims,
wherein the foamed plastic material comprises PVC, in particular hard PVC, as base material, and wherein the foamed plastic material has a density of 0.7 - 1.3 g/cm3, in particular of 0.7 - 1.0 g/cm3, and/or a thermal conductivity of 0.07 - 0.15 W/ (m*K), in particular of 0.07 - 0.11 W/(m*K).

6. The building transition according to any of claims 1 to 4,
wherein the foamed plastic material comprises polystyrene as base material and wherein the foamed plastic material has a density of 0.5 - 0.9 g/cm3, in particular of 0,5 - 0.7 g/cm3, and/or a thermal conductivity of 0.07 - 0.15 W/ (m*K), in particular of 0.07 - 0.11W/(m * K).

7. The building transition according to any of claims 1 to 4,
wherein the basic plastic composite material of the foamed plastic composite material is in the form of a wood-plastic composite material or a composite material made of plastic and rice husks or fibres or flour thereof.

8. The building transition according to any of the preceding claims,
wherein the building transition is an external building transition and the plastic plastering strip is an external plastic plastering strip.

9. The building transition according to any of the preceding claims,
wherein the building transition is an internal building transition and the plastic plastering strip is an internal plastic plastering strip.

10. A method for producing a plastic plastering strip (2, 26), comprising a base body that has at least one plastering portion (10, 40) which is intended for plastering into or under a plaster layer, in particular into or under a plaster layer on a thermal insulation of a building wall, and a fixing portion (4, 28) by means of which the plastic plastering strip (2, 26) is intended to be fastened to at least one component of the building, i.e. either to the first or the second building component or to both building components;
wherein the base body is extruded,
wherein the plastering portion (10, 40) and/or the fixing portion (4, 28) of the plastic plastering strip (2, 26) are formed as a common extrusion member or as separate extrusion members;
wherein the plastic plastering strip (2, 26) comprises a strip-shaped protective lug (22, 60) which is adapted to be severed or broken off and which consists of the material of the base body and is manufactured together with the same by extrusion; or wherein at least two different material portions, which are co-extruded jointly, are present for the base body and the protective lug (22, 60);
**characterized in that**
the plastering portion (10) and/or the fixing portion (4) of the plastic plastering strip (2, 26) are extruded from a foamed plastic material or a foamed plastic composite material; and
that, in at least a partial region of the base body, the granulate, powder or agglomerate of the plastic base material or the granulate, powder or agglomerate of the plastic composite material has at least one blowing agent added thereto upstream of the shaping opening of the extrusion die, and with the supply of heat, a volatile component of the blowing agent is split off upstream of and/or at the shaping opening, so that the plastic material or plastic composite material of the partial region of the base body is foamed.

11. The method according to claim 10,
wherein the granulate, powder or agglomerate of the plastic base material of the entire base body or the granulate, powder or agglomerate of the plastic composite material of the entire base body has a blowing agent added thereto upstream of the shaping opening of the extrusion die, and wherein, with the supply of heat, a volatile component of the blowing agent is split off upstream of and/or at the shaping opening, so that the plastic material or the plastic composite material of the entire base body is foamed.

12. The method according to claim 10 or 11,
wherein the blowing agent is azodicarbonamide (ADC), 4,4-oxibis (benzenesulfohydrazide, OBSH) or sodium hydrogen carbonate.

## Revendications

1. Transition de bâtiment ayant un premier composant d'un bâtiment réalisé sous forme de cadre de fenêtre ou de porte et un deuxième composant d'un bâtiment, à savoir une couche de crépi d'un mur de bâtiment ou une couche de crépi sur une isolation thermique d'un mur de bâtiment,
comprenant une baguette à crépi en matière plastique (2, 26) placée à la ou dans cette transition de bâtiment et ayant un corps de base comportant au moins une zone de crépissage (10, 40) incorporée dans ou sous la couche de crépis, en particulier dans ou sous la couche de crépi sur l'isolation thermique du mur de bâtiment,
cependant que la baguette à crépi en matière plastique (2, 26) comporte une zone de mise en place (4, 28) avec laquelle la baguette à crépi en matière plastique (2, 26) est fixée à au moins un composant du bâtiment, c'est-à-dire soit au premier, soit au deuxième composant de bâtiment, soit aux deux composants de bâtiment,
cependant que la zone de crépissage (10, 40) et la zone de mise en place (4, 28) de la baguette à crépi en matière plastique (2, 26) sont réalisées en tant qu'une pièce commune d'extrusion ou en tant que pièces distinctes d'extrusion
cependant que la baguette à crépi en matière plastique (2, 26) comporte une patte de protection (22, 60) en forme de ruban détachable ou pouvant être rompue ; qui est en le matériau du corps de base rompue et a été fabriquée en même temps que ce dernier par voie d'extrusion ; ou cependant que, pour le corps de base et la patte de protection (22, 60), il y a au moins deux zones différentes de matériau qui sont coextrudées ensemble ;
cependant qu'au moins une zone partielle du corps de base comporte un matériau en matière plastique moussé ou un matériau composite en matière plastique moussé ;
**caractérisé en ce que**
la zone de crépissage (10) et/ou la zone de mise en place (4) de la baguette à crépi en matière plastique (2, 26) comportent un matériau en matière plastique moussé ou un matériau composite en matière plastique moussé, et
le matériau en matière plastique moussé ou le matériau composite en matière plastique moussé de la baguette à crépi en matière plastique (2, 26) présente une densité réduite de 5 à 95 % en comparaison avec la densité du matériau en matière plastique ou matériau composite en matière plastique pur ou massif.

2. Transition de bâtiment selon la revendication 1, cependant que la totalité du corps de base de la baguette à crépi en matière plastique (2, 26) comporte un matériau en matière plastique moussé ou un matériau composite en matière plastique moussé.

3. Transition de bâtiment selon la revendication 1 ou 2, cependant que le matériau en matière plastique moussé de la baguette à crépi en matière plastique (2, 26) est réalisé sous forme de matière plastique mousse essentiellement à alvéoles fermées ayant une pluralité de cellules confinées d'air , d'un autre gaz ou d'un autre mélange gazeux, ou cependant que le matériau composite en matière plastique moussé de la baguette à crépi en matière plastique (2, 26) est réalisé sous forme d'un matériau composite en matière plastique mousse essentiellement à alvéoles fermées ayant une pluralité de cellules confinées d'air, d'un autre gaz ou d'un autre mélange gazeux.

4. Transition de bâtiment selon une des revendications précédentes, cependant que le matériau en matière plastique moussé ou le matériau composite en matière plastique moussé de la baguette à crépi en matière plastique (2, 26) présente une densité réduite de 5 à 70 %, en particulier de 25 à 60 %, en comparaison avec la densité du matériau en matière plastique pur ou du matériau composite en matière plastique pur , et/ou cependant que le matériau en matière plastique moussé ou le matériau composite en matière plastique moussé de la baguette à crépi en matière plastique (2, 26) présente une conductivité thermique réduite de 5 à 70 %, en particulier de 25 à 60 %, en comparaison avec la conductivité thermique du matériau en matière plastique pur ou matériau composite en matière plastique pur.

5. Transition de bâtiment selon une des revendications précédentes, cependant que le matériau en matière plastique moussé comporte en tant que matériau de base du PVC, en particulier du PVC rigide, et cependant que le matériau en matière plastique moussé présente une densité de 0,7 - 1,3 g/ cm³, en particulier de 0,7 - 1,0 g/cm³, et/ou une conductivité thermique réduite de 0,07 - 0,15 W/(m*K), en particulier de 0,07 - 0,11 W/(m*K).

6. Transition de bâtiment selon une des revendications de 1 à 4, cependant que le matériau en matière plastique moussé comporte en tant que matériau de base du polystyrène, et cependant que le matériau en matière plastique moussé présente une densité de 0,5 - 0,9 g/cm³, en particulier de 0,5-0,7 g/cm³, et/ou une conductivité thermique de 0,07 - 0,15 W/(m*K), en particulier de 0,07 - 0,11 W/(m*K).

7. Transition de bâtiment selon une des revendications de 1 à 4, cependant que le matériau composite en matière plastique de base du matériau composite en matière plastique moussé est réalisé sous forme de matière composite bois-matière plastique ou sous forme de matière composite en matière plastique et balles de riz ou fibres et farine de ceci.

8. Transition de bâtiment selon une des revendications précédentes, cependant que la transition de bâtiment consiste en une transition de bâtiment extérieure et que la baguette à crépi en matière plastique est une baguette à crépi en matière plastique extérieure.

9. Transition de bâtiment selon une des revendications précédentes, cependant que la transition de bâtiment consiste en une transition de bâtiment intérieure et que la baguette à crépi en matière plastique est une baguette à crépi en matière plastique intérieure.

10. Procédé de fabrication d'une baguette à crépi en matière plastique (2, 26) ayant un corps de base comportant au moins une zone de crépissage (10, 40) destinée à être incorporée dans ou sous une couche de crépis, en particulier dans ou sous une couche de crépi sur une isolation thermique d'un mur de bâtiment, et une zone de mise en place (4, 28) avec laquelle la baguette à crépi en matière plastique (2, 26) est destinée à être fixée à au moins un composant du bâtiment, c'est-à-dire soit au premier, soit au deuxième composant de bâtiment, soit aux deux composants de bâtiment ;
dans lequel le corps de base est extrudé,
cependant que la zone de crépissage (10, 40) et la zone de mise en place (4, 28) de la baguette à crépi en matière plastique (2, 26) sont réalisées sous forme d'une pièce commune d'extrusion ou en tant que pièces distinctes d'extrusion,
cependant que la baguette à crépi en matière plastique (2, 26) comporte une patte de protection (22, 60) en forme de ruban détachable ou pouvant être rompue qui est en le matériau du corps de base et est fabriquée en même temps que ce dernier par voie d'extrusion ; ou cependant que, pour le corps de base et la patte de protection (22, 60), il y a au moins deux zones différentes de matériau qui sont coextrudées ensemble ;
**caractérisé en ce que**
la zone de crépissage (10, 40) et/ou la zone de mise en place (4, 28) de la baguette à crépi en matière plastique (2, 26) sont extrudées à partir d'un matériau en matière plastique moussé ou d'un matériau composite en matière plastique moussé, et que
à au moins une zone partielle du corps de base, il est ajouté au granulé, à la poudre ou à l'aggloméré du matériau de base en matière plastique ou au granulé, à la poudre ou à l'aggloméré du matériau composite en matière plastique, avant l'ouverture, donnant la forme, de l'outil d'extrusion, au moins un agent gonflant, et cependant que, lors de l'apport de chaleur, avant et/ou pendant l'ouverture donnant la forme, un constituant volatil de l'agent gonflant se sépare, de telle sorte que le matériau en matière plastique ou le composite en matière plastique de la zone partielle du corps de base est moussé.

11. Procédé selon la revendication 10, cependant que, au granulé, à la poudre ou à l'aggloméré du matériau de base en matière plastique de la totalité du corps de base, ou au granulé, à la poudre ou à l'aggloméré du matériau composite en matière plastique de la totalité du corps de base, avant l'ouverture, donnant la forme, de l'outil d'extrusion, un agent gonflant est ajouté, et cependant que, lors de l'apport de chaleur, avant et/ou pendant l'ouverture donnant la forme, un constituant volatil de l'agent gonflant se sépare, de telle sorte que le matériau en matière plastique ou le composite en matière plastique de la totalité du corps de base est moussé.

12. Procédé selon la revendication 10 ou 11, cependant que l'agent gonflant consiste en de l'azodicarbonamide (ADC), en de l'oxibis 4,4 (benzènesulfohydrazide, OBSH) ou en de l'hydrogénocarbonate de sodium.
